# EUROPÄISCHE PATENTSCHRIFT

(11) **EP 0 747 251 B1**
(45) Veröffentlichungstag und Bekanntmachung des Hinweises auf die Patenterteilung: **09.06.1999**
(21) Anmeldenummer: 96108389.6
(22) Anmeldetag: 25.05.1996
(51) Int. Cl.: B60J 7/22

(54) **Windabweiser**
Wind deflector
Déflecteur de vent

(30) Priorität: 07.06.1995 DE 19520348
(43) Veröffentlichungstag der Anmeldung: 11.12.1996
(73) Patentinhaber: WEBASTO KAROSSERIESYSTEME GmbH, D-82131 Stockdorf (DE)
(72) Erfinder: Schüch, Siegmund, 81669 München (DE)
(74) Vertreter: Wiese, Gerhard

(56) Entgegenhaltungen:
- EP-A- 0 374 421
- DE-A- 2 741 442
- FR-A- 625 871

## Beschreibung

Die Erfindung betrifft einen Windabweiser mit einem schwenkbar an einem Dachrahmen eines öffnungsfähigen Fahrzeugdaches angeordneten Grundkörper und mit wenigstens einer gegenüber dem Grundkörper zur Vergrößerung der Ausstellhöhe verschiebbaren Zusatzplatte.

Derartige Windabweiser mit einer in Richtung der Höhe des Fahrzeuges verstellbaren Zusatzplatte sind aus der DE-A1 39 13 567 oder aus dem DE-U 90 07 234 bekannt. Die bekannten Windabweiser müssen entweder manuell verstellt werden, oder sie sind mittels vom Antrieb des Schiebedaches abgeleiteten oder eigenen Antrieben verfahrbar. Derartige Windabweiser sind in ihrem Aufbau außerordentlich kompliziert.

Der vorliegenden Erfindung liegt die Aufgabe zugrunde, einen Windabweiser, der bei geringem Stauraum eine große Ausstellhöhe ermöglicht, in einfacher Weise zu gestalten.

Diese Aufgabe wird gemäß der vorliegenden Erfindung durch die im Patentanspruch 1 angegebenen Mittel gelöst. Vorteilhafte Ausgestaltungen der Erfindung sind den Unteransprüchen zu entnehmen.

Dadurch, daß der Grundkörper und die Zusatzplatten in ihren seitlichen Endbereichen Führungsmittel zur Führung der jeweils benachbarten Zusatzplatte aufweisen, ist eine fächerartig ineinandergreifende Anordnung mehrerer Zusatzplatten möglich, die in zusammengeschobenem Zustand hinter dem Grundkörper verstaubar sind. Durch die Anlenkung eines Ausstellhebels an der im ausgestellten Zustand obersten Zusatzplatte wird ein einfaches Ausstellen und Zusammenschieben eines solchen fächerartigen Verbundes ermöglicht.

Vorteilhaft ist es, wenn der Ausstellhebel in an sich bekannter Weise in Richtung auf eine Ausstellbewegung des Windabweisers durch eine Feder vorbelastet ist. Bei einer derartigen Anordnung wird der Ausstellhebel durch Verfahren des Deckels nach hinten freigegeben und durch Verfahren des Deckels nach vorne in die Schließposition niedergedrückt.

Gemäß einer vorteilhaften Weiterbildung ist vorgesehen, daß der Grundkörper und die Zusatzplatten mit Anschlagmitteln versehen sind, die deren gegenseitige Verschiebung begrenzen. Dadurch, daß die Anschlagmittel im fächerartigen Verbund aus Grundkörper und Zusatzplatten integriert sind, erübrigt sich ein zusätzlicher Anschlag für den Ausstellhebel.

Vorteilhaft ist es ferner, wenn die Zusatzplatten nahe ihrer Unterkante Mitnehmer aufweisen, die beim Ausstellen die jeweils folgende Zusatzplatte anheben. Derartige Mitnehmer bewirken, daß jeweils eine Zusatzplatte die nächstfolgende beim Ausstellen mit anhebt, ohne daß zwischen den Zusatzplatten zusätzliche federnde Verbindungen erforderlich wären.

Vorteilhaft sind der Grundkörper und die Zusatzplatten in ihrer Form und in ihren Abmessungen derart gestaltet, daß sie sich in eingefahrenem Zustand fächerartig ineinander legen. Eine derartige Gestaltung ergibt sowohl im eingefahrenen als auch im ausgefahrenen Zustand ein optisch ansprechendes Erscheinungsbild.

Die Feder zum Ausstellen des Ausstellhebels ist vorteilhaft als Druckfeder oder Drehschenkelfeder ausgebildet, welche zwischen dem Dachrahmen und dem Ausstellhebel angeordnet ist. Eine Anordnung in diesem Bereich ist aus Platzgründen vorteilhaft.

Eine alternative Ausgestaltung sieht vor, daß die Feder als zwischen dem Grundkörper und der obersten Zusatzplatte wirkende Druckfeder ausgebildet ist. Eine derartige Ausbildung hat den Vorteil, daß eine solche Feder durch die seitlichen Endbereiche des Grundkörpers und der Zusatzplatten kaschiert werden kann.

Die Anschlagmittel sind vorteilhaft als sich nahe der Oberkante des Grundkörpers und der Zusatzplatten in etwa horizontal nach hinten erstreckende Rippen ausgebildet. Derartige sich quer zur Haupterstreckungsrichtung der Zusatzplatten erstreckende Rippen bewirken gleichzeitig eine Versteifung der Zusatzplatten.

Vorteilhaft ist es ferner, wenn die Mitnehmer als sich nahe der Unterkante der Zusatzplatten in etwa horizontal nach vorne erstreckende Rippen ausgebildet sind. Durch derartige weitere Rippen wird ebenfalls eine zusätzliche Versteifung der Zusatzplatten bewirkt. Außerdem bewirkt ein Anliegen der rippenförmigen Mitnehmer an den ebenfalls rippenförmigen Anschlagmitteln ein zuverlässiges Abdichten über die gesamte Breite des Windabweisers.

Gemäß einer weiteren vorteilhaften Ausgestaltung ist vorgesehen, daß der Grundkörper und/oder wenigstens eine der Zusatzplatten im ausgestellten Zustand Aussparungen für Teilluftströme freigeben. Dabei können die Aussparungen als Löcher oder Einkerbungen komplett im Grundkörper oder einer der Zusatzplatten ausgebildet sein oder sie können sich beim gegenseitigen Verschieben zwischen dem Grundkörper und/oder den Zusatzplatten durch entsprechende sich ergänzende Aussparungen in den Randbereichen ergeben. Die Aussparungen können ferner als bewußt zwischen den zueinander verschiebbaren Elementen erzeugte Spalte ausgebildet sein. Durch derartige Aussparungen kann das aerodynamische Verhalten eines solchen Windabweisers entscheidend verbessert werden.

Unabhängig von der vorstehend umschriebenen Ausgestaltung ergibt sich in jedem Falle ein Windabweiser, der sich bei Vorsehen von mehreren Zusatzplatten auf eine große, wirkungsvolle Gesamthöhe ausstellen läßt und der dennoch im eingefahrenen Zustand einen äußerst geringen Stauraum im Bereich des Dachrahmens erfordert.

Nachfolgend sind Ausführungsbeispiele der Erfindung anhand der Zeichnungen beschrieben. Es zeigt:
- Fig. 1: einen schematischen Schnitt durch ein Fahrzeugdach im Bereich der Vorderkante der Dachöffnung,
- Fig. 2: eine schematische Draufsicht auf einen Eckbereich des Dachrahmens,
- Fig. 3: eine schematische perspektivische Ansicht eines Windabweisers mit Seitenteilen,
- Fig. 4: eine schematische Draufsicht auf einen Windabweiser,
- Fig. 5: eine Seitenansicht des Windabweisers nach Fig. 4,
- Fig. 6: einen schematischen Schnitt durch einen seitlichen Endbereich des Windabweisers gemäß der Linie VI-VI in Fig. 5,
- Fig. 7: eine schematische Teil-Frontansicht eines Windabweisers in ausgestelltem Zustand mit Aussparungen und
- Fig. 8: eine alternative Darstellung zur Fig. 7.

In einem festen Fahrzeugdach 1 ist eine Dachöffnung 3 vorgesehen, die mittels eines Deckels 2 oder alternativ dazu eines Verdecks eines Faltdaches wahlweise verschließbar oder wenigstens teilweise freigebbar ist. Der Deckel 2 bzw. das Verdeck ist an einem Dachrahmen 4 gelagert, der mit dem festen Fahrzeugdach 1 verbunden ist. Am Dachrahmen 4 sind Führungsschienen 5 angeordnet, die in den seitlichen Bereichen des Dachrahmens 4 zur Führung des Deckels 2 bei einer Öffnungs- bzw. Schließbewegung dienen. Der Deckel 2 bzw. das Verdeck ist mittels eines elektrischen Antriebes 6 betätigbar, der unterhalb des festen Fahrzeugdaches 1 vor der Vorderkante der Dachöffnung 3 angeordnet ist. Der Antrieb 6 steht über in den Führungsschienen 5 verlaufende Antriebskabel 7 in Verbindung mit nicht gezeigten, ebenfalls in den Führungsschienen 5 geführten Antriebsschlitten für den Deckel 2.

Im Bereich der Vorderkante des Dachrahmens 4 ist ein Stauraum für einen insgesamt mit 8 bezeichneten Windabweiser vorgesehen. Dieser wird bei eingefahrenem Windabweiser 8 von oben her vom Deckel 2 bzw. dem Verdeck begrenzt. Beim nach hinten Verfahren des Deckels 2 bzw. des Verdecks stellt sich der Windabweiser 8 nach oben über das feste Fahrzeugdach 1 aus, um dadurch den Fahrtwind von der freigelegten Dachöffnung 3 abzuleiten.

Um eine große Ausstellhöhe Z des Windabweisers 8 zu erreichen und dennoch in der Höhe des Fahrzeuges einen geringen Stauraum für den Windabweiser 8 zu beanspruchen, ist vorgesehen, daß der Windabweiser 8 sich aus einem Grundkörper 9 und Zusatzplatten 10 bzw. 11 zusammensetzt. An der in ausgestelltem Zustand obersten Zusatzplatte 11 ist in den seitlichen Endbereichen 15 ein Ausstellhebel 12 angelenkt, der mit seinem anderen Ende an einem Lagerbock 13 angelenkt ist, der am Dachrahmen 4 befestigt ist. Das untere Ende des Ausstellhebels 12 kann dabei mit einem nicht gezeigten Schlitten innerhalb eines Führungsschlitzes 14 im Lagerbock 13 in Längsrichtung verschiebbar gelagert sein.

Auf den Ausstellhebel 12 wirkt eine mit einem Ende am Dachrahmen 4 befestigte Druckfeder 22. Diese beaufschlagt den Ausstellhebel 12 und somit den Windabweiser 8 in Ausstellrichtung. Der Ausstellhebel 12 wird in bekannter Weise durch nach hinten Verlagern des Deckels 2 bzw. des Verdecks freigegeben, sodaß die Ausstellfeder 22 den Ausstellhebel nach oben drückt. Umgekehrt wird beim Verfahren des Deckels 2 in die Schließposition der Ausstellhebel 12 vom Deckel 2 bzw. von einem mit diesem verbundenen Teil nach unten gedrückt und bewegt dabei den Windabweiser 8 mit seinen Elementen 11, 10, 9 in den Stauraum am Dachrahmen 4.

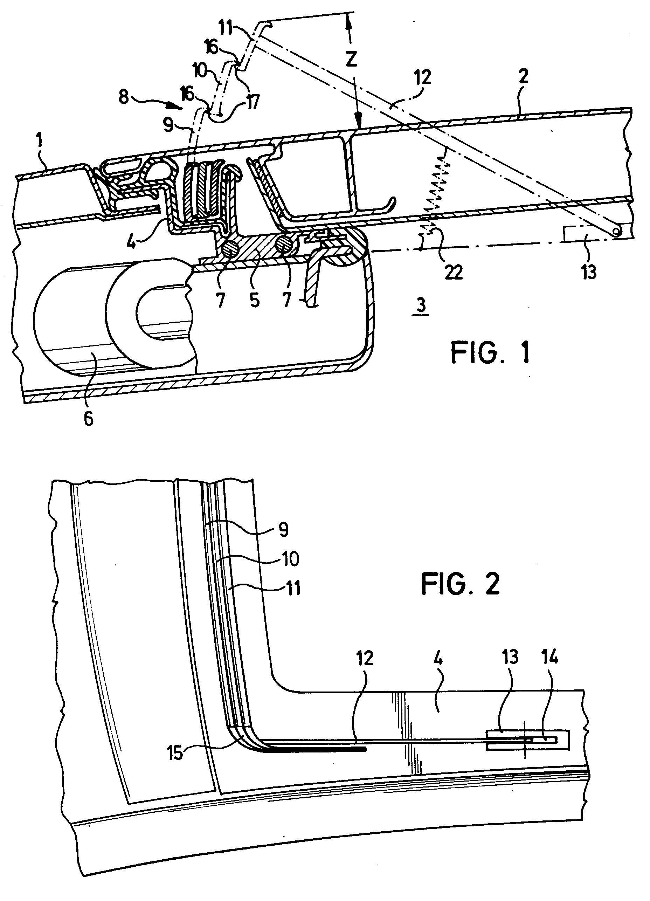

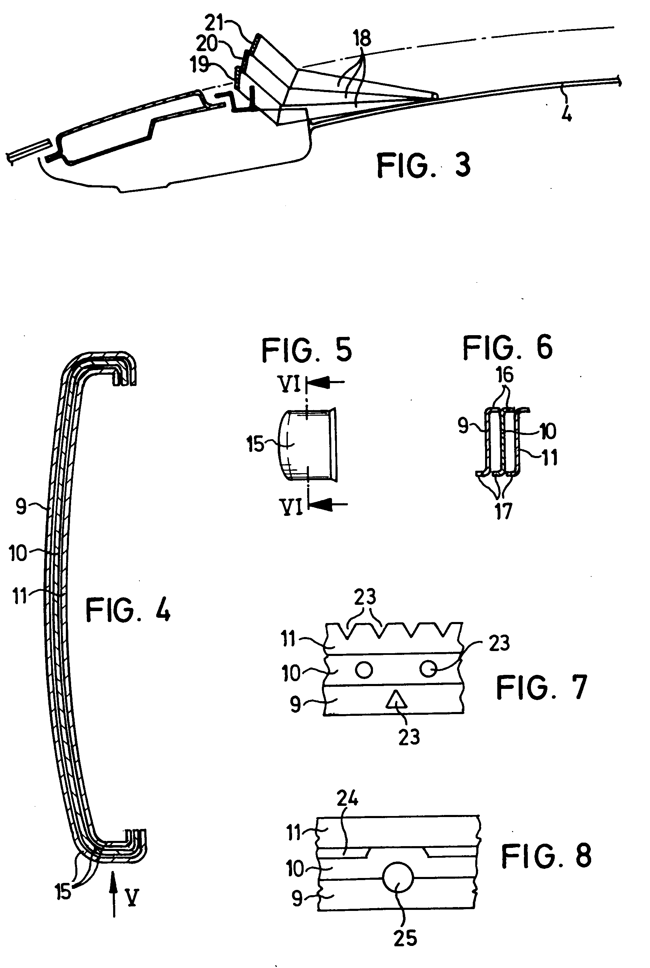

Der Grundkörper 9 und die Zusatzplatten 10 bzw. 11, von denen im Ausführungsbeispiel gemäß Fig. 1 zwei gezeigt sind, sind in ihren seitlichen Endbereichen 15 so gestaltet, daß der Grundkörper 9 für die in Ausstellposition des Windabweisers 8 darüberliegende Zusatzplatte 10 und diese wiederum für die darüber liegende Zusatzplatte 11 eine Führung bildet. Dies kann zum einen dadurch geschehen, daß die seitlichen Endbereiche 15, wie in Fig. 4 dargestellt, U-förmig ineinander greifen, zum anderen ist es ebenso möglich, wie in Fig. 3 dargestellt, Grundkörper 19 und Zusatzplatten 20 bzw. 21 jeweils mit Seitenteilen 18 zu versehen, von denen das im ausgestellten Zustand jeweils weiter unten liegende das nächst darüber liegende seitlich umgreift und dadurch führt. In diesem Falle können alle Seitenteile 18 vorzugsweise an einem gemeinsamen Drehpunkt am Dachrahmen 4 angelenkt sein. Eine in Fig. 3 nicht gezeigte Ausstellfeder wirkt dabei wiederum - wie auf den Ausstellhebel 12 in Fig. 1 - auf das Seitenteil 18 der obersten Zusatzplatte 21.

Die in Fig. 2 angedeutete, in Längsrichtung verlagerbare Anlenkung des Ausstellhebels 12 in einem Führungsschlitz 14 ist entbehrlich, wenn Grundkörper 9 und Zusatzplatte 10 bzw. 11 bezüglich ihrer Führung in den Endbereichen 15 eine derart gewölbte Form aufweisen, daß der Anlenkpunkt des Ausstellhebels 12 an der obersten Zusatzplatte 11 bezüglich des Lagerbocks 13 bei der Ausstell- bzw. Absenkbewegung einen festen Radius beschreibt.

Die Mitnahme der Zusatzplatte 10 bzw. des Grundkörpers 9 erfolgt beim Ausstellen der obersten Zusatzplatte 11 mittels des Ausstellhebels 12 durch in Form von Rippen ausgebildete Mitnehmer 17, die im Bereich der Unterkante der Zusatzplatten 11 bzw. 10 derart ausgebildet sind, daß sie sich in etwa horizontal nach vorn erstrecken und mit nahe der Oberkante des Grundkörpers 9 und der ersten Zusatzplatte 10 angeordneten Anschlagmitteln 16 zusammenwirken, die sich in Form quer zur Fahrtrichtung verlaufenden Rippen nach hinten erstrecken. Durch die in Form von quer verlaufenden Rippen ausgebildeten Anschlagmittel 16 und Mitnehmer 17 erhalten der Grundkörper 9 und die Zusatzplatten 10 bzw. 11 eine erhöhte Steifigkeit. Zudem wird durch die vergrößerte Anlagefläche eine erhöhte Dichtigkeit zwischen den einzelnen Elementen 9 bzw. 10 und 11 erreicht.

Wie in den Fign. 5 und 6 gezeigt, können die Anschlagmittel 16 und Mitnehmer 17 jedoch auch in den seitlichen Endbereichen 15 des Grundkörpers 9 bzw. der Zusatzplatten 10 und 11 vorgesehen sein. Die Profile haben dabei in etwa die Form eines umgedrehten Z, wobei jeweils ein Mitnehmer im Bereich der Unterkante mit einem Anschlagmittel nahe der Oberkante eines benachbarten, in Ausstellposition unterhalb liegenden Elementes 9, 10, 11 zusammenwirkt.

Statt der in Fig. 1 dargestellten Druckfeder 22 kann die Ausstellung des Windabweisers 8 auch mittels einer im Bereich des unteren Anlenkpunktes des Ausstellhebels 12 angeordneten Drehschenkelfeder bewirkt werden. Es ist ferner denkbar, zwischen dem Dachrahmen 4 und der obersten Zusatzplatte 11 bzw. zwischem dem Grundkörper 9 und der obersten Zusatzplatte 11 eine Druckfeder anzuordnen, die das Ausstellen des Windabweisers 8 bewirkt.

Der Windabweiser 8 kann, wie in Fig. 7 dargestellt, mit einer oder mehreren verschieden geformten Aussparungen 23 versehen sein. Diese Aussparungen können entweder als Löcher oder Kerben ausgebildet sein, die sich entweder in nur einem der Elemente 9 bzw. 10 oder 11 befinden, oder aber, wie in Fig. 8 dargestellt, als schlitzförmige Aussparungen 24 oder kreisförmige Aussparungen 25 oder auch Aussparungen anderer Form, die beim Ausstellvorgang zwischen zwei benachbarten Elementen 11 bzw. 10 oder 10 bzw. 9 des Windabweisers 8 freigelegt werden. Mittels derartiger Aussparungen, die in beliebigen Kombinationen ausgebildet sein können, kann das aerodynamische Verhalten des Windabweisers 8 insgesamt beeinflußt werden.

Die Erfindung ist darüber hinaus nicht auf die gezeigte Ausführungsform mit einem Grundkörper 9 und zwei Zusatzplatten 10, 11 beschränkt. Sie umfaßt in der Minimalversion einen Grundkörper und eine Zusatzplatte. Nach oben hin ist die Zahl der Zusatzplatten nicht begrenzt.

### Bezugszeichenliste

- 1: Fahrzeugdach
- 2: Deckel
- 3: Dachöffnung
- 4: Dachrahmen
- 5: Führungsschiene
- 6: Antrieb
- 7: Antriebskabel
- 8: Windabweiser
- 9: Grundkörper
- 10: Zusatzplatte
- 11: Zusatzplatte
- 12: Ausstellhebel
- 13: Lagerbock
- 14: Führungsschlitz
- 15: Endbereich (von 9,10,11)
- 16: Anschlagmittel
- 17: Mitnehmer
- 18: Seitenteile
- 19: Grundkörper
- 20: Zusatzplatte
- 21: Zusatzplatte
- 22: Feder
- 23: Aussparung
- 24: Aussparung
- 25: Aussparung
- Z: Ausstellhöhe

## Patentansprüche

1. Windabweiser (8) mit einem schwenkbar an einem Dachrahmen (4) eines öffnungsfähigen Fahrzeugdaches (1) angeordneten Grundkörper (0;19) und mit wenigstens einer gegenüber dem Grundkörper (9;19) zur Vergrößerung der Ausstellhöhe verschiebbaren Zusatzplatte 10,11; 20,21), **dadurch gekennzeichnet,** daß der Grundkörper (9;19) und die Zusatzplatte (10,11;20,21) in ihren seitlichen Endbereichen (15) Führungsmittel zur Führung der jeweils benachbarten Zusatzplatte (10,11;20,21) aufweisen und daß die im ausgestellten Zustand des Windabweisers oberste Zusatzplatte 11; 21) mit einem Ausstellhebel (12) verbunden ist, dessen anderes Ende am Dachrahmen (4) gelagert ist.

2. Windabweiser (8) nach Anspruch 1, **dadurch gekennzeichnet,** daß der Ausstellhebel (12) in Richtung auf eine Ausstellbewegung des Windabweisers (8) durch eine Feder (22) vorbelastet ist.

3. Windabweiser (8) nach Anspruch 1, **dadurch gekennzeichnet,** daß der Grundkörper (9;19) und die Zusatzplatten 10,11; 20,21) mit Anschlagmitteln (16) versehen sind, die deren gegenseitige Verschiebung begrenzen.

4. Windabweiser (8) nach einem der vorhergehenden Ansprüche, **dadurch gekennzeichnet,** daß die Zusatzplatten (10,11; 20,21) nahe ihrer Unterkanten Mitnehmer (17) aufweisen, die beim Ausstellen die jeweils folgende Zusatzplatte (10;21) anheben.

5. Windabweiser nach einem der vorhergehenden Patentansprüche, **dadurch gekennzeichnet,** daß der Grundkörper (9;19) und die Zusatzplatten (10,11; 20,21) in ihrer Form und ihren Abmessungen derart gestaltet sind, daß sie sich im eingefahrenen Zustand fächerartig ineinander legen.

6. Windabweiser nach einem der Ansprüche 2 bis 5, **dadurch gekennzeichnet,** daß die Feder als zwischen dem Grundkörper (9;19) und der obersten Zusatzplatte (11,21) wirkende Druckfeder ausgebildet ist.

7. Windabweiser nach wenigstens einem der Ansprüche 3 bis 6, **dadurch gekennzeichnet,** daß die Anschlagmittel (16) als sich nahe der Oberkante des Grundkörpers (9; 19) und der Zusatzplatte (10; 20) in etwa horizontal nach hinten erstreckende Rippen ausgebildet sind.

8. Windabweiser nach wenigstens einem der Ansprüche 4 bis 7, **dadurch gekennzeichnet,** daß die Mitnehmer (17) als sich nahe der Unterkante der Zusatzplatten (10,11; 20,21) in etwa horizontal nach vom erstreckende Rippen ausgebildet sind.

9. Windabweiser nach wenigstens einem der vorhergehenden Ansprüche, **dadurch gekennzeichnet,** daß der Grundkörper (9; 19) und/oder wenigstens eine der Zusatzplatten (10,11; 20,21) im ausgestellten Zustand Aussparungen (23; 24; 25) für Teilluftströme freigeben.

## Claims

1. A wind deflector (8) with a basic member (9; 19) pivotally disposed on a roof frame (4) of an openable vehicle roof (1) and with at least one additional panel (10,11; 20,21) displaceable in relation to the basic member (9; 19) in order to increase the height to which the deflector is extended, characterised in that the basic member (9; 19) and the auxiliary panels (10,11; 20,21) have in their lateral end portions (15) guide means to guide the respectively adjacent auxiliary panel (10,11; 20,21) and in that the auxiliary panel (11; 21) which is uppermost when the wind deflector is extended, is connected to a push-out lever (12; 18) the other end of which is mounted on the roof frame (4).

2. A wind deflector (8) according to Claim 1, characterised in that the push-out lever (12; 18) is biassed by a spring (22) in the direction of a push-out movement of the wind deflector (8).

3. A wind deflector (8) according to Claim 1, characterised in that the basic member (9; 19) and the auxiliary panels (10,11; 20,21) are provided with abutment means to limit their mutual displacement.

4. A wind deflector (8) according to one of the preceding Claims, characterised in that the auxiliary panels (10,11; 20,21) have, close to their bottom edges, entraining means (17) which, when the deflector is pushed out, raise the respectively next auxiliary panel (10; 20).

5. A wind deflector according to one of the preceding Patent Claims, characterised in that the basic member (9; 19) and the auxiliary panels (10,11; 20,21) are in their form and dimensions so designed that when they are retracted, they inter-engage in fan-like manner.

6. A wind deflector according to one of Claims 2 to 5, characterised in that the spring is constructed as a thrust spring which takes effect between the basic member (9; 19) and the uppermost auxiliary panel (11; 21).

7. A wind deflector according to at least one of Claims 3 to 6, characterised in that the abutment means (16) are constructed as substantially horizontally rearwardly extending ribs close to the top edge of the basic member (9; 19) and the auxiliary panel (10; 20).

8. A wind deflector according to at least one of Claims 4 to 7, characterised in that the entraining means (17) are constructed as substantially horizontally forwardly extending ribs close to the bottom edge of the auxiliary panels (10,11; 20,21).

9. A wind deflector according to at least one of the preceding Claims, characterised in that the basic member (9; 19) and/or at least one of the auxiliary panels (10,11; 20,21), when in the extended state, expose recesses (23; 24; 25) for partial air streams.

## Revendications

1. Déflecteur de vent (8) comportant un corps de base (9 ; 19) disposé de façon à pouvoir pivoter sur un cadre de toit (4) d'un toit de véhicule (1) susceptible d'être ouvert et avec une plaque additive (10, 11 ; 20, 21), déplaçable par rapport au corps de base (9 ; 19) en vue d'augmenter la hauteur d'actionnement,
caractérisé en ce que
• le corps de base (9 ; 19) et la plaque additive (10, 11 ; 20, 21) présentent, dans leurs zones d'extrémité (15) latérales, des moyens de guidage destinés à assurer le guidage de la plaque additive (10, 11 ; 20, 21) chaque fois voisine, et
• la plaque additive (11 ; 21) qui est à la position la plus haute lorsque le déflecteur de vent à l'état exposé, est reliée à un levier d'actionnement (12 ; 18) dont l'autre extrémité est montée sur le cadre de toit (4).

2. Déflecteur de vent (8) selon la revendication 1, caractérisé en ce que
le levier d'actionnement (12 ; 18) est préchargé, au moyen d'un ressort (22), dans la direction d'un déplacement d'actionnement du déflecteur de vent (8).

3. Déflecteur de vent (8) selon la revendication 1, caractérisé en ce que
le corps de base (9 ; 19) et les plaques additives (10, 11 ; 20, 21) sont dotées de moyens de butée (16) délimitant leur déplacement mutuel.

4. Déflecteur de vent (8) selon l'une des revendications précédentes,
caractérisé en ce que
les plaques additives (10, 11 ; 20, 21) présentent, près de leurs arêtes inférieures, des organes d'entraînement (17) qui, lors de l'actionnement soulèvent la plaque additive (10 ; 20) chaque fois la suivante.

5. Déflecteur de vent selon l'une des revendications précédentes,
caractérisé en ce que
le corps de base (9 ; 19) et les plaques additives (10, 11 ; 20, 21) sont configurés, quant à leurs formes et à leurs dimensions, de manière à se placer les unes dans les autres en éventail lorsqu'elles sont à l'état rétracté.

6. Déflecteur de vent selon l'une des revendications 2 à 5,
caractérisé en ce que
le ressort est réalisé sous la forme de ressort de compression, agissant entre le corps de base (9 ; 19) et la plaque additive (11, 21) la plus haute.

7. Déflecteur de vent selon au moins l'une des revendications 3 à 6,
caractérisé en ce que
les moyens de butée (16) sont réalisés sous la forme de nervures, s'étendant à peu près horizontalement vers l'arrière, près de l'arête supérieure du corps de base (9 ; 19) et de la plaque additionnelle (10 ; 20).

8. Déflecteur de vent selon au moins l'une des revendications 4 à 7,
caractérisé en ce que
les organes d'entraînement (17) sont réalisés sous la forme de nervures s'étendant à peu près horizontalement vers l'avant, près de l'arête inférieure des plaques additives (10, 11 ; 20, 21).

9. Déflecteur de vent selon au moins des revendications précédentes,
caractérisé en ce que
le corps de base (9 ; 19) et/ou au moins l'une des plaques additives (10, 11 ; 20, 21) libèrent, à l'état exposé, des évidements (23 ; 24 ; 25) destinés à des écoulements d'air partiels.
